# EUROPÄISCHE PATENTSCHRIFT

(11) **EP 3 203 659 B1**
(45) Veröffentlichungstag und Bekanntmachung des Hinweises auf die Patenterteilung: **10.06.2020**
(21) Anmeldenummer: 17152277.4
(22) Anmeldetag: 19.01.2017
(51) Int. Cl.: H04B 10/2575, H01S 5/042, H04B 10/50, H04J 14/02, H04N 7/22

(54) **ELEKTRONISCHE KNOTENEINHEIT, DOCSIS-DATENÜBERTRAGUNGSSYSTEM UND VERFAHREN ZUR MODULATION VON LICHTSIGNALERZEUGUNGSMITTELN**
ELECTRONIC NODE UNIT, DOCSIS DATA TRANSMISSION SYSTEM AND METHOD FOR MODULATION OF LIGHT SIGNAL GENERATING MEANS
UNITÉ DE NOEUD ÉLECTRONIQUE, SYSTÈME DE TRANSMISSION DE DONNÉES DOCSIS ET PROCÉDÉ DE MODULATION DE MOYENS DE PRODUCTION DE SIGNAUX LUMINEUX

(30) Priorität: 03.02.2016 DE 102016101882
(43) Veröffentlichungstag der Anmeldung: 09.08.2017
(73) Patentinhaber: ASC-TEC AG, 78351 Bodman-Ludwigshafen (DE)
(72) Erfinder: Klassen, Johannes, 78359 Orsingen-Nenzingen (DE); Hiba, Benian, 88662 Überlingen (DE); Schroff, Wilhelm, 78464 Konstanz (DE)
(74) Vertreter: Patentanwälte Behrmann Wagner PartG mbB

(56) Entgegenhaltungen:
- JP-A- H10 276 138
- US-A1- 2015 304 038

## Beschreibung

Die vorliegende Erfindung betrifft eine elektronische Knoteneinheit zur Datenübertragung zwischen einem ersten Leitungsanschluss für drahtgebundene und einem zweiten Leitungsanschluss für Lichtwellenleiter-gebundene Datenkommunikation nach dem Oberbegriff des Hauptanspruchs.

Ferner betrifft die vorliegende Erfindung ein nach dem DOCSIS-Standard eingerichtetes Datenübertragungssystem unter Nutzung einer derartigen, gattungsgemäßen elektronischen Knoteneinheit, und die vorliegende Erfindung betrifft ein Verfahren zur Modulation von Lichtsignalerzeugungsmitteln in einer derartigen gattungsgemäßen elektronischen Knoteneinheit zur Datenübertragung.

Vor dem technischen Hintergrund von sowohl drahtgebunde Leitungen, etwa Koaxialkabel, als auch Lichtwellenleiter (etwa Glasfasern) aufweisenden Kabelnetzen und darin stattfindender Datenkommunikation, eingeschlossen einer Informationsübertragung in beide Richtungen zwischen diesen verschiedenen Leitungstypen, werden gattungsgemäße elektronische Knoteneinheiten benutzt, um die Datenübertragung zwischen den optischen und den drahtgebundenen Leitungen sicherzustellen. Auch als "RFoG optical networking units" (R-ONU) bezeichnet, erfolgt durch gattungsgemäße elektronische Knoteneinheiten nach dem Oberbegriff des Hauptanspruchs prinzipiell eine Informationsübertragung in beiden Richtungen (Vorwärts- sowie Rückkanal), etwa in einem typischen Anwendungsfall der Ankopplung einer Glasfaser-Übertragungsstrecke an eine drahtgebundene, insbesondere koaxiale Leitungstechnik aufweisende Endstelle für einen Haushalt, welchem dann auf diese Weise sowohl Fernseh-, als auch Breitband-Internetsignale in Vorwärtsrichtung zur Verfügung stehen, und wobei dann wiederum diese Endstelle einen Rückkanal angeboten bekommt. Derartige Kabelnetze werden auch als FTTH (fibre to the home = Glasfaser bis zum Hausanschluss) oder aber als FTTB (fibre to the building = Glasfaser bis zum Gebäudeanschluss) bezeichnet.

Nicht zuletzt vor dem Hintergrund, die kostengünstige, hohe Übertragungsbandbreiten anbietende und betriebssichere Glasfaser-Übertragungstechnik möglichst weitgehend mit (existierender und häufig in Koaxialtechnik ausgeführter) Kabel-Infrastruktur zusammenzuführen, ohne gerade an Endstellen eine umfassende Umstellung auf Lichtwellenleiter vornehmen zu können, haben sich die gattungsgemäßen Technologien bewährt, wobei auch am entgegengesetzten Ende des Glasfasernetzes, der sogenannten Kopfstelle, gleichermaßen häufig noch draht- bzw. kabelgebundene Infrastruktur vorliegt und in die Datenkommunikation einzubinden ist.

Während gattungsgemäße elektronische Knoteneinheiten (R-ONU, wobei "R" für RFoG = RF over glass = hochfrequentes Nutzsignal über Glas steht) im Rahmen ihrer bidirektionalen Funktionalität im Vorwärts- und Rückkanal auf vergleichsweise einfachen elektro-optischen Konversionstechnologien beruhen (lichtempfindliche Detektoren zum Abschließen einer Lichtleitfaser in Richtung auf Draht einerseits, optische Signalerzeuger, etwa Halbleiter-Laserdioden, zum Umsetzen eines elektrischen Kabelsignals in ein Lichtwellenleitersignal andererseits), machen insbesondere die steigenden Anforderungen an eine Übertragungsrate, Datendichte und Kanalanzahl eines zu übertragenden (hochfrequenten) Nutzsignals über eine gattungsgemäße Knoteneinheit diese Technologien komplex. So gilt es nach dem Stand der Technik als etabliert, die Nutzdaten in beide Richtungen mit Multiplextechnik unter Verwendung von HF-Unterträgern zu übertragen, wobei etwa für die gattungsgemäß und im Rahmen der vorliegenden Erfindung ausschließlich problematisierte Übertragung der Rückkanalsignale Zeitmulitplextechnologien nach einem TDMA-Protokoll (Time division multiple access) Einsatz finden. Ein verbreitetes Beispiel für eine derartige Übertragungstechnologie ist der sogenannte DOCSIS-Standard (data over cable service interface specification), welcher in verschiedenen Evolutions- und Entwicklungsstufen eine Mehrzahl von Kanälen (etwa 12 Kanälen gemäß DOCSIS 3.0) in einem Frequenzbereich zwischen 5 und 85 MHz (und bis zu 400 MHz bei Version 3.1) zur Übertragung anbietet.

Einen weiteren technischen Hintergrund, gleichermaßen Bezugsrahmen für die vorliegende Erfindung, bietet die Norm DIN EN 60728-14:2014-12 (IEC 60728-14:2014), welche sich mit optischen Übertragungssystemen für die RFoG-Technologie befasst. Der technische Offenbarungsgehalt dieser im Jahr 2014 veröffentlichten Norm gilt sowohl zum technischen Hintergrund, als auch zum Einsatz-und Anwendungskontext, als auch zum Verständnis des einschlägigen Durchschnittsfachmannes als zur Erfindung gehörig in die vorliegende Erfindungsoffenbarung einbezogen - insbesondere wird der Fachmann die Symbole, Abkürzungen und Begrifflichkeiten, wie sie etwa auf den Seiten 16 und 17 dieser Normveröffentlichung offenbart sind, beim Verständnis der technischen Lehre berücksichtigen.

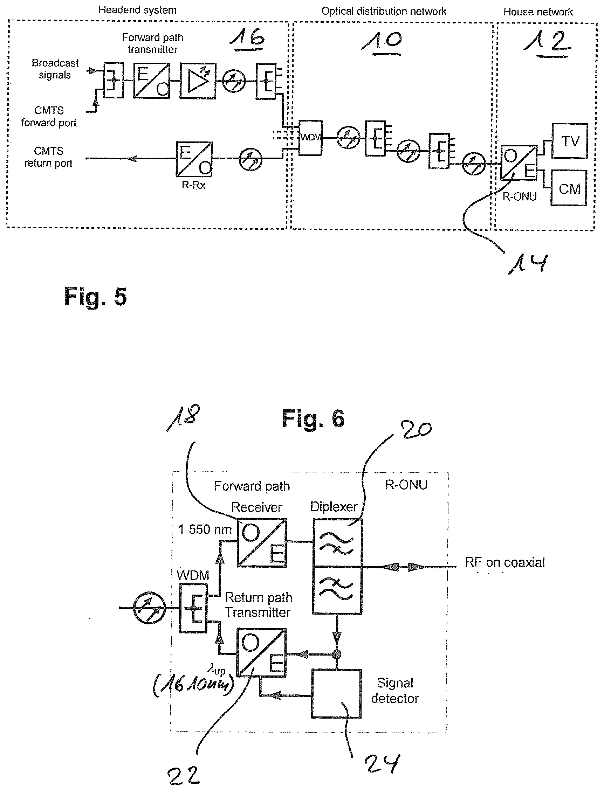

So offenbart etwa die Fig. 5 entsprechend der Seite 18 der englischsprachigen Normveröffentlichung zur IEC 60728-14:2014, in der Art eines Referenzmodels den Einsatzkontext für die vorliegende Erfindung: Beidends eines faseroptischen Verteilungsnetzes 10, dieses damit einbettend, sind jeweils drahtgebundene, üblicherweise koaxiale Technologien angekoppelt. Einerseits in Form einer Haus-Endstelle (house network) 12, wobei, wie schematisch in der Fig. 5 gezeigt, eine elektronische Knoteneinheit R-ONU 14 ein digitales Fernseh- sowie Computersignal für einen Endnutzer bereitstellt; zusätzlich ist diesem Endnutzer ein Rückkanal zur Kommunikation über das optische Verteilnetzwerk 10 zu einer linksseitig verbundenen Kopfstelle (headend system) 16 angeboten, welche gleichermaßen kabelbasiert realisiert ist und zu diesem Zweck sowohl in Vorwärts- als auch Rückwärtsrichtung optische Umsetzereinheiten (bezeichnet als Transmitter bzw. Receiver, je nach Richtung) zur Ankopplung an das mittig eingekoppelte faseroptische System 10 aufweist.

Als Schemadarstellung zur Verdeutlichung des prinzipiellen Aufbaus der Knoteneinheit 14 in Fig. 5 verdeutlicht die Fig. 6 dessen wesentliche Funktionskomponenten (wiederum unter Bezug auf die veröffentlichte Norm IEC 60708-14:2014, welche in der englischsprachigen Fassung diese Darstellung auf der Seite 19 abbildet): Ein in der Darstellung oben gezeigter Vorwärtskanal empfängt das de-multiplexte Nutzsignal des faseroptischen Netzwerks 10 und setzt dieses in einer Umsetzungseinheit (Receiver) 18 in ein elektronisches Signal um, woraufhin dieses dann in einer Splitter- bzw. Frequenzfiltereinheit 20 für den Endnutzer als RF-Nutzsignal für TV, Internet usw. zur Verfügung steht.

Im im unteren Bereich der Fig. 6 gezeigten Rückkanal sorgt eine optisch signalerzeugende Sendeeinheit (return path transmitter) 22 für eine Umsetzung eines auf den Rückkanal gegebenen Nutzsignals in Richtung auf das optische Fasernetzwerk 10, wobei, als Reaktion auf eine Detektion des Vorliegens eines derartigen Nutzsignals durch eine Detektoreinheit (Signal-Detector 24) eine Lichtsignalerzeugungsquelle im Lichtsender 22, typischerweise eine Laserdiode oder dergleichen halbleiterbasierte Lichterzeugungseinheit, angesteuert und mit dem Rückkanal Nutzsignal moduliert wird.

Gemäß Spezifikation der genannten Norm ist eine der für diese Rückkanalkommunikation verwendeten Wellenlängen der Einheit 22 die Wellenlänge 1610 nm, wobei, wiederum in ansonsten bekannter Weise, die angesteuerte Laserdiode im Regelfall im sogennanten Burst-Modus betrieben wird, einem nicht-kontinuierlichen Betriebsmodus, welcher das Aktivieren der Laserdiode als Reaktion auf ein Detektions- und Aktivierungssignal der Signaldetektoreinheit 24 vorsieht. Mit anderen Worten, die Laserdiode erzeugt lediglich ein Lichtsignal, wenn ein (detektiertes) Nutzsignal vorhanden ist, welches dann den 1610 nm Lichtträger moduliert.

Im Rahmen der vorliegenden Erfindung hat sich jedoch herausgestellt, dass das im Rahmen von RFoG-Netzen übliche Verwenden des beschriebenen Burst-Modus bei der Ansteuerung der Lichtsignalerzeugungsmittel (insbesondere einer Laserdiode) zu Problemen führt, welche die Datenübertragung (insbesondere das Signal-/Rauschverhältnis und damit die Bitfehlerrate) beeinträchtigen, wobei diese negativen Einflüsse, welche im Rahmen der Erfindung als mögliche Intermodulationseinflüsse durch das Ein- bzw. Ausschalten des Lichtsignalerzeugungsmittels begriffen werden können, mit steigender Bandbreite bzw. Frequenzbreite des Nutzsignals ansteigen. Damit führen insbesondere Migrationen zu neueren DOCSIS-Versionen mit steigendem Frequenzband und steigender Kanalzahl des Nutzsignals zu einer Verschärfung dieses Problems.

Aus der US 2015/304038 A1 ist eine elektronische Knoteneinheit zur Datenübertragung zwischen einem ersten Leitungsanschluss für drahtgebundene und einem zweiten Leitungsanschluss für Lichtwellenleiter-gebundene Datenkommunikation nach dem Oberbegriff des Hauptanspruchs bekannt. Zum weiteren Stand der Technik wird verwiesen auf die JP H10 276138 A.

Aufgabe der vorliegenden Erfindung ist es daher, im Rahmen einer gattungsgemäßen elektronischen Knoteneinheit zur RFoG-Datenkommunikation, insbesondere für den Rückkanal von kabelgebunden auf optisch, eine Verbesserung des Datenübertragungsverhaltens dahingehend zu erreichen, dass in einem nicht-kontinuierlichen Betriebsmodus der Lichtsignalerzeugungsmittel, insbesondere einer Laserdiode im Burst-Modus, und als Reaktion auf eine Aktivierung dieser Lichtsignalerzeugungsmittel ein Auftreten von signalstörenden bzw. eine Signalübertragungsqualität senkenden Modulations- bzw. Signaleffekten verhindert werden kann, damit eine RFoG-Übertragungstechnologie, insbesondere für den Rückkanal von einer kabelgebundenen in eine faseroptische Netzwerkstruktur, geschaffen werden kann, welche im Hinblick auf eine nutzbare Übertragungsbandbreite, reduzierte Bitfehlerrate und Signalqualität des zu übertragenden Nutzsignals verbessert ist.

Die Aufgabe wird durch die elektronische Knoteneinheit mit den Merkmalen des Hauptanspruchs gelöst. Vorteilhafte Weiterbildungen der Erfindung sind in den Unteransprüchen beschrieben. Ferner wird Schutz im Rahmen der vorliegenden Erfindung beansprucht für ein Verfahren zur Modulation von Lichtsignalerzeugungsmitteln in einem RFoG-Übertragungssystem nach dem unabhängigen Patentanspruch 11, wobei die aus den die Knoteneinheit weiterbildenden abhängigen Patentansprüchen ersichtlichen Verfahrensmerkmale als gleichermaßen die Verfahrenserfindung weiterbildende Merkmale gelten sollen. Ferner wird im Rahmen der vorliegenden Erfindung und insoweit als bevorzugte Verwendung Schutz beansprucht für ein DOCSIS-Datenübertragungssystem, aufweisend eine RFoG-Netzwerkstruktur mit einer Mehrzahl von nutzerseitigen Endstellen, denen jeweils erfindungsgemäße elektronische Knoteneinheiten (R-ONUs) zugeordnet sind.

In erfindungsgemäß vorteilhafter Weise sind den Lichtsignalerzeugungsmitteln Modulationsverzögerungsmittel zugeordnet, und zwar so, dass ein die Modulation des optischen Trägersignals bewirkendes Anlegen des (üblicherweise breitbandigen) Nutzsignals an die Lichtsignalerzeugungsmittel um eine vorbestimmte und/oder voreingestellte Verzögerungszeit verzögert ist, und zwar bezogen auf eine (im Regelfall ohnehin vorhandene, nämlich durch eine Signallaufzeit auf Zuleitungen bewirkte) Laufzeitverzögerung zu den Lichtsignalerzeugungsmitteln. Damit sieht die vorliegende Erfindung vor, gegenüber dem Stand der Technik gezielt das Aufschalten und damit Modulieren des Nutzsignals auf die Laserdiode (als typische bevorzugte Ausführung der Lichtsignalerzeugungsmittel) zu verzögern, bis ein Einschwingen nach dem Aktivieren bzw. Einschalten der Laserdiode beendet ist und damit, durch den bereits erreichten eingeschwungenen, stationären Betrieb, Intermodulationen od.dgl. Signalstörungen nicht mehr zu befürchten sind. Vorteilhafte Konsequenz dieser Maßnahme ist eine deutlich verbesserte Signalübertragung in der Vorrichtung, die sich etwa in einer signifikant reduzierten Bitfehlerrate niederschlägt.

Dabei ist es insbesondere in der praktischen Umsetzung dieser erfindungsgemäßen Lehre günstig und bevorzugt, die bevorzugt durch schaltungstechnische oder Steuermaßnahmen vorbestimmte bzw. voreingestellte Verzögerungszeit so auszuwählen, dass, bezogen auf den Aktivierungsvorgang der Lichterzeugungsmittel, diese typischerweise die Hälfte ihrer eingeschwungenen Dauerleistung oder ihrer Maximalleistung erreicht haben; im Rahmen der Erfindung hat sich herausgestellt, dass eine derartige Einstellung sich nicht nur in der erfindungsgemäß beabsichtigten Weise vorteilhaft auf das Signalübertragungsverhalten auswirkt, auch ist die erfindungsgemäße Zeitverzögerung hinreichend kurz, um noch innerhalb der durch die eingangs erwähnte Norm IEC 60728-14:2014 bestimmten Zeitgrenzen zu bleiben, welche insoweit dann auch die Möglichkeit begrenzen, die erfindungsgemäße Verzögerungszeit über einen Grenzwert hinaus zu erstrecken. Dies gilt insbesondere auch für einen Nutzdatenverlust durch die Verzögerung, der aber dadurch vermieden wird, dass das erfindungsgemäß verzögert anliegende Signal zum Zeitpunkt des Anliegens (immer) noch Vorlauf- bzw. sog. Präambel-Impulse besitzt, die keinen Dateninhalt und damit auch keinen Datenverlust bedeuten.

Damit eignet sich dann die vorliegende Erfindung insbesondere für eine Kanal- und Übertragungsstruktur entsprechend verschiedenen Varianten des DOCSIS-Standards, wobei insbesondere auch DOCSIS 3.0 und höher im Rahmen der Erfindung vorteilhaft umgesetzt werden können, ohne dass die dadurch bewirkten erweiterten Nutzsignal-Frequenzbereiche und Kanalanzahlen in der eingangs beschriebenen Weise zu Nachteilen für das Datenübertragungsverfahren führen. Damit ist es dann insbesondere auch bevorzugt, die Lichtsignalerzeugungsmittel durch eine Laserdiode zu realisieren, wobei entsprechend einer bevorzugten RFoG-Datenübertragungs- und Netzwerkstruktur und bei Einsatz der Erfindung im Rahmen einer Rückkanal-Implementierung Trägerwellenlängen von 1610 nm (ergänzen oder alternativ auch von 1310 nm oder andere Träger zwischen 1250 und 1650 nm) als bevorzugt anzusehen sind.

In der konkreten schaltungstechnischen bzw. Hardware-Realisierung der Modulationsverzögerungsmittel sieht die Erfindung verschiedene Möglichkeiten vor, welche jeweils isoliert, alternativ jedoch auch in Kombination eingerichtet sein können, abhängig von den jeweiligen Implementierungsbedingungen und dem Umfeld der elektronischen Knoteneinheit.

So ist es einerseits vorgesehen und im Rahmen von Weiterbildungen der Erfindung bevorzugt, die Modulationsverzögerungsmittel als zwischen die Datenempfangsmittel und die Lichtsignalerzeugungsmittel eingeschleiftes Schaltungsnetzwerk zu realisieren, welches, z.B. in Form einer ansonsten bekannten kapazitiven und/oder induktiven Lösung, auch rein passiv mit diskreten oder parasitären Bauelementen realisiert sein kann.

Ergänzend oder alternativ ist es im Rahmen der Erfindung vorgesehen, die erfindungsgemäßen Modulationsverzögerungsmittel als den Nutzsignaldetektionsmitteln nachgeschaltete und einen elektronischen Nutzsignalfluss von den Datenempfangsmitteln zu den Lichtsignalerzeugungsmitteln gesteuert schaltende und/oder dämpfende Schalteinheit auszubilden. Dabei ist es wohl möglich und denkbar, in digitaler Art ein Signal anzulegen bzw. zu unterbrechen, alternativ kann zwischen verschiedenen Signalstärken oder Dämpfungsstufen des (Nutz-)Signals gesteuert umgeschaltet werden. Auch hier sind verschiedene Wege denkbar, um diese Schaltfunktionalität umzusetzen, wobei sich insbesondere schnell schaltende Halbleiterschalter, z.B. in Form von PIN-Dioden od.dgl. Einheiten, als besonders vorteilhaft und geeignet herausgestellt haben.

Wiederum ergänzend oder alternativ sieht die Erfindung vor, anstelle einer durch geeignetes Netzwerk- oder Schalterverhalten vorbestimmten Verzögerung eine Aufschaltung des Nutzsignals bzw. eine Modulation des optischen Trägersignals durch das Nutzsignal abhängig zu machen von einem Detektionsergebnis von Detektionsmitteln, die feststellen, ob die Lichtsignalerzeugungsmittel (also etwa die Laserdiode) einen eingeschwungenen bzw. vorbestimmten Betriebszustand erreicht haben. Dies kann einerseits als bevorzugte Variante im Rahmen der Erfindung geschehen durch eine Messung eines Betriebsstroms der Lichtsignalerzeugungsmittel (etwa durch einen geeignet in die Stromversorgung eingeschleiften Shunt), ergänzend oder alternativ kann im Rahmen dieses Erfindungsgedanken vorgesehen sein, die (optische) Lichtleistung bzw. Lichtstärke der Lichtsignalerzeugungsmittel (also der Laserdiode) zu messen, wobei es sich hier anbietet, die üblicherweise ohnehin in einer derartigen Lasereinheit vorhandene Monitor- bzw. Referenz-Photodiode zu verwenden und deren Detektorsignal für diesen Zweck auszuwerten. Mit zugehörigen Schwellwertmitteln lässt sich dann in der erfindungsgemäßen Weise eine Verzögerung einrichten bzw. vorbestimmen und erfindungsgemäß dann die Nutzsignalmodulation verzögert vornehmen, nämlich erst, wenn ein vorbestimmter Lichtleistungsschwellwert erreicht ist.

Wie auch für die Aktivierung des Licht-Trägersignals selbst ist es bei den durch einen Betriebsstromschwellwert und/oder einen Lichtleistungsschwellwert getriggerten verzögerten Aktivierungen der Modulation bzw. der Aufschaltung des Nutzsignals sinnvoll, Hysteresemittel vorzusehen, so dass insbesondere Schwankungen dieser Größen kein unkontrolliertes Modulations-Schaltverhalten auslösen.

Im Ergebnis erreicht die vorliegende Erfindung in überraschend einfacher und eleganter Weise, dass elektronische Knoteneinheiten zur Datenübertragung in einem RFoG-System auch bei steigender Kanalzahl und Bandbreite des Nutzsignals mit hoher Signalqualität und geringer Fehlerrate insbesondere für den Rückkanal betrieben werden können, so dass selbst für zukünftige erhöhte Anforderungen an die Datenübertragungsqualität in zukünftigen gemischten Netzen die technischen Voraussetzungen geschaffen werden können, draht- bzw. kabelgebundene Endstellen mit fiberoptischen Netzwerken zusammenzuführen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1 bis 4:: jeweils schematische Darstellungen einer elektronischen Knoteneinheit (beschränkt auf den Rückkanal) zur Ankopplung einer Koaxialleitung an eine Glasfaser unter Einsatz erfindungsgemäßer Modulationsverzögerungsmittel;
- Fig. 5:: eine Kontextdarstellung als Referenzmodell zum Verdeutlichen eines in koaxiale Systeme eingebetteten optischen Netzwerks und
- Fig. 6:: eine Schemadarstellung einer elektronischen Knoteneinheit (R-ONU) im Rahmen der koaxialen Endstelle gemäß Fig. 5.

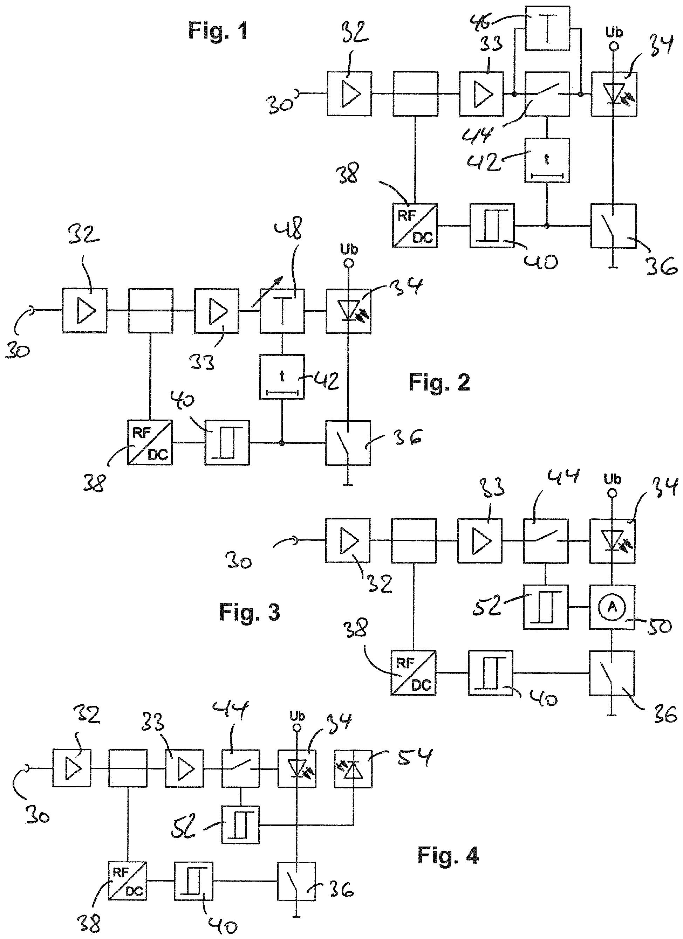

Die Figuren 1 bis 4 verdeutlichen schematisch jeweils die Rückkanal-Funktionalität mit verzögertem Anlegen eines an einem Koaxialanschluss 30 der Knoteneinheit (diese ist lediglich im Hinblick auf den Rückkanal dargestellt) anliegenden Nutzsignals, welches nach dem DOCSIS-Standard strukturiert ist. Das mittels einer ersten Verstärkereinheit 32 verstärkte Nutzsignal wird, in den jeweiligen Figurenebenen, entlang der horizontalen Richtung bis zu einer schematisch gezeigten Laserdiode 34 als Lichtsignalerzeugungsmittel, vorgeschaltet einem (nicht gezeigten) Lichtwellenleiter-Ausgang, zugeführt, wobei die Laserdiode 34, mit einer Betriebsspannungsquelle Ub verbunden, über eine zugeordnete (üblicherweise mittels eines Halbleiters realisierte) Schalteinheit 36 gesteuert aktiviert bzw. deaktiviert wird.

Analog dem in Fig. 6 gezeigten, prinzipiell als bekannt vorauszusetzenden Schema, greift eine RF-Detektoreinheit 38 auf die Zuleitung des Nutzsignals nach der ersten Verstärkereinheit 32 zu und erzeugt ein Detektionssignal, wenn das hochfrequente Nutzsignal vorliegt (genauer: am Ausgang der Verstärkereinheit 32 anliegt). Das von der Einheit 38, praktisch etwa realisierbar mittels eines ansonsten bekannten RF-Detektorchips (z.B. Typ LTC 5507, Hersteller linear technology) bewirkt dann über eine Hysterese-Einheit 40 die Aktivierung der Betriebsspannung für die Laserdiode 34 mittels der Schalteinheit 36.

Zusätzlich und gemäß einem ersten Ausführungsbeispiel der Erfindung zeigt ergänzend die Fig. 1 ein Verzögerungsglied 42, welches, getriggert durch das Detektorsignal des Detektors 38, mittels einer (wiederum elektronisch realisierten und angesteuerten) Schaltereinheit 44 das RF-Nutzsignals erst dann zur Laserdiode 34 durchschaltet und damit die Modulation des optischen Triggersignals der Laserdiode 34 gestattet, wenn eine vorbestimmte Verzögerungszeit t, realisiert mittels der z.B. als durch eine Kapazität realisierten diskreten Verzögerungsschaltung 42, abgelaufen ist. Das Prinzipschaltbild der Fig. 1 verdeutlicht zudem ein die Schalteinheit 44 überbrückendes Dämpfungsglied 46, welches auch entfallen kann; im dargestellten Ausführungsbeispiel würde bei geöffneter Schalterstellung (entsprechend der Darstellung der Fig. 1) die Signaldämpfung des Dämpfungsgliedes 46 greifen, während dann im Aktivierungszustand nach abgelaufener Verzögerungszeit t auf das Erfassen des Anliegens des Nutzsignals ein ungedämpftes Signal vorliegt. Bei Entfall des Dämpfungsgliedes 46 würde bei geöffneter Schalterstellung 44 kein Signalfluss zur Diode 34 erfolgen. Auch kann etwa bei den in Fig. 1 verkörperten Funktionsprinzipien die Verzögerungsbaugruppe 42 nicht mittels diskreter (aktiver oder passiver) Bauelemente realisiert sein, sondern etwa auch in speziell eingerichteten bzw. bemessenen Eigenschaften des Schalters 44 bestehen, z.B. einer zu Verzögerungszwecken groß bemessenen Gate-Kapazität eines die Schalteinheit 44 realisierenden FETs.

Gegenüber der Prinzipkonfiguration der Ausführungsbeispiele gemäß Fig. 1 ersetzt das Ausführungsbeispiel der Fig. 2 die Schalteinheit 44 durch ein kontinuierlich auf- bzw. absteuerbares Sperrglied 48, in der Praxis typischerweise realisiert durch PIN-Dioden oder integrierte Schaltungen. Wie auch bei den weiteren Ausführungsbeispielen bezeichnen ansonsten identische Bezugszeichen identische Funktionskomponenten der Ausführungsbeispiele.

Das Ausführungsbeispiel der Fig. 3 sieht wiederum zwischen einer zweiten Verstärkungseinheit 33 und der Laserdiode 34 einen (z.B. mittels Halbleiterelement realisierten) Schalter 44 vor, dieser wird jedoch, im Gegensatz zu den Ausführungsbeispielen der Fig. 1, 2, gesteuert geöffnet bzw. geschlossen durch eine Stromdetektoreinheit 50 (etwa realisiert mit einem nicht näher gezeigten Shunt), deren Ausgangssignal beim Erreichen einer vorbestimmten (einem eingeschwungenen Einschaltzustand entsprechenden) Betriebszustand der Laserdiode 34 und über eine Hysterese-Einheit 52 den Schalter 44 schließt, um daraufhin dann das anliegende RF-Nutzsignal zur Modulation des Laserdiodenträgers durchzuschalten.

Ein vergleichbares Prinzip verfolgt das Ausführungsbeispiel der Fig. 4, hier wird jedoch ein stationärer bzw. eingeschwungener Betriebszustand der Laserdiode 34 nicht mittels einer Erfassung des Laserdioden-Betriebsstroms gelöst, sondern mittels eines optischen Detektors 54 in der praktischen Realisierung in Form einer ohnehin der Laserdiode 34 zugeordneten Monitordiode, welche als Reaktion auf das Erkennen eines Träger-Laserlichtsignals einer vorbestimmten Mindest-Lichtstärke wiederum über eine Hysterese-Einheit 52 den (wiederum etwa mittels Halbleiterelement realisierten) Schalter 44 schließt.

Die vorliegende Erfindung ist nicht auf die gezeigten Ausführungsbeispiele beschränkt. Vielmehr sind auch andere Prinzipien und Schaltungskonfigurationen denkbar, um im erfindungsgemäßen Sinn das Anlegen des RF-Nutzsignals an die Laserdiode zum Zweck einer Modulation des Laser-Trägersignals gezielt und vorbestimmt zu verzögern.

Auch ist die vorliegende Erfindung im Kontext der Ausführungsbeispiele der Fig. 1 bis 4 als RFoG-Koaxial-Glasfaser-Technologie mit DOCSIS-RF-Nutzsignal dargestellt, welches einen in der Bitfehlerrate und Signalqualität verbesserten Rückkanal für eine Laserdiode im Wellenlängenbereich 1250 bis 1650, z.B. 1610 nm ermöglicht, auch diese Konfiguration ist jedoch rein exemplarisch, und die Erfindung ist darüber hinaus in vielen anderen Einsatzumgebungen möglich und denkbar.

## Patentansprüche

1. Elektronische Knoteneinheit zur Datenübertragung zwischen einem ersten Leitungsanschluss (30) für drahtgebundene, insbesondere koaxial drahtgebundene, und einem zweiten Leitungsanschluss für Lichtwellenleiter-gebundene, insbesondere faseroptische, Datenkommunikation, mit
Datenempfangsmitteln (32) für ein hochfrequentes, insbesondere mehrkanaliges und/oder eine Mehrzahl von Trägerfrequenzen aufweisendes Nutzsignal an dem ersten Leitungsanschluss, Nutzsignal-Detektionsmitteln (38) zur Detektion, ob das Nutzsignal an den Datenempfangsmitteln anliegt und durch diese für eine Weiterleitung bereitgestellt werden kann, und
den Nutzsignal-Detektionsmitteln nachgeschaltete, mit dem Nutzsignal modulierbar ausgebildete, in einem nicht-kontinuierlichen Betriebsmodus, insbesondere Burst-Modus, und als Reaktion auf eine Aktivierung durch die Nutzsignal-Detektionsmittel betreibbare Lichtsignalerzeugungsmittel (34) zum Erzeugen eines am zweiten Leitungsanschluss zum Einkoppeln in einen Lichtwellenleiter vorgesehenes und mit dem Nutzsignal modulierten optischen Trägersignals, wobei
den Lichtsignalerzeugungsmitteln Modulationsverzögerungsmittel (42, 44; 48; 50; 54) so zugeordnet sind, dass ein die Modulation des optischen Trägersignals bewirkendes Anlegen des Nutzsignals an die Lichtsignalerzeugungsmitteln zusätzlich zu einem über eine Zuleitungslaufzeit bedingten Zeitversatz um eine vorbestimmte und/oder voreingestellte Verzögerungszeit verzögert ist,
die insbesondere so bemessen und/oder eingestellt ist, dass die Verzögerungszeit erst abläuft, wenn eine signalerzeugende Lichtquelle der Lichtsignalerzeugungsmittel nach der Aktivierung mindestens 40 %, bevorzugt mindestens 50 %, weiter bevorzugt mindestens 60 %, einer eingeschwungenen und/oder maximal optischen Lichtleistung der Lichtquelle erreicht hat,
**dadurch gekennzeichnet,**
**dass** die zur Betriebsstrom- und/oder optischen Lichtleistungsdetektion der Lichtsignalerzeugungsmittel ausgebildeten Modulationsverzögerungsmittel Hysteresemittel (52) so zugeordnet aufweisen, dass nach einer schwellwertbezogenen Aktivierung eines Nutzdatenflusses von den Datenempfangsmitteln zu den Lichtsignalerzeugungsmitteln dieser erst wieder unterbrochen und/oder deaktiviert wird, wenn ein aktueller Detektionswert der Betriebsstrom- bzw. Lichtleistungsdetektion den Schwellwert um einen vorbestimmten Hystereseabstand unterschreitet.

2. Knoteneinheit nach Anspruchs 1, **dadurch gekennzeichnet, dass** das Nutzsignal in einem Frequenzbereich zwischen 2 MHz und 400 MHz, insbesondere in einem Bereich zwischen 5 MHz und 205 MHz, vorliegt,
und/oder einer Frequenz- und Kanalverteilung nach einem Standard gemäß DOCSIS folgt.

3. Knoteneinheit nach Anspruch 1 oder 2, **dadurch gekennzeichnet, dass** das optische Trägersignal als Lasersignal einer optischen Wellenlänge im Bereich zwischen 1250 nm und 1650 nm vorliegt.

4. Knoteneinheit nach einem der Ansprüche 1 bis 3, **dadurch gekennzeichnet, dass** die Modulationsverzögerungsmittel als zwischen die Datenempfangsmittel und die Lichtsignalerzeugungsmittel eingeschleiftes Schaltungsnetzwerk (42), insbesondere Passivnetzwerk und bevorzugt in Form einer aus einer Kapazität und/oder Induktivität realisierten Verzögerungsschaltung, realisiert sind.

5. Knoteneinheit nach einem der Ansprüche 1 bis 4, **dadurch gekennzeichnet, dass** die Modulationsverzögerungsmittel als den Nutzsignaldetektionsmitteln nachgeschaltete und einen elektronischen Signalfluss von den Datenempfangsmitteln zu den Lichtsignalerzeugungsmitteln gesteuert schaltende und/oder dämpfende Schalteinheit (44, 46) ausgebildet sind.

6. Knoteneinheit nach einem der Ansprüche 1 bis 5, **dadurch gekennzeichnet, dass** die Modulationsverzögerungsmittel einen Betriebsstrom der Lichtsignalerzeugungsmittel detektierende und als Reaktion auf ein Erreichen oder Überschreiten eines vorbestimmten Betriebsstromschwellwerts des Betriebsstroms einen elektronischen Nutzsignalfluss von den Datenempfangsmitteln zu den Lichtsignalerzeugungsmitteln aktivierende Stromdetektionsmittel (50) aufweisen.

7. Knoteneinheit nach einem der Ansprüche 1 bis 6, **dadurch gekennzeichnet, dass** die Modulationsverzögerungsmittel eine optische Lichtleistung der Lichtsignalerzeugungsmittel detektierende und als Reaktion auf ein Erreichen oder Überschreiten eines vorbestimmten Lichtleistungsschwellwerts der optischen Lichtleistung einen elektronischen Nutzsignalfluss von den Datenempfangsmitteln zu den Lichtsignalerzeugungsmitteln aktivierende Lichtdetektionsmittel (54) aufweisen.

8. Knoteneinheit nach Anspruch 7, **dadurch gekennzeichnet, dass** die Lichtdetektionsmittel als Halbleiterlasermittel aufweisenden Lichtsignalerzeugungsmitteln zugeordnete Lichtsensoreinheit, insbesondere einer Laserdiode zugeordnete Monitordiode, ausgebildet sind.

9. DOCSIS-Datenübertragungssystem aufweisend eine mittels eines Koaxialkabels sowie eines Glasfaserkabels als Lichtwellenleiter realisierten Datenübertragungsnetz, bei welchem einer Mehrzahl von koaxial angebundenen, insbesondere nutzerseitigen, Endstellen jeweils die elektronische Knoteneinheit nach einem der Ansprüche 1 bis 8, insbesondere zur Realisierung einer Uplink-Funktionalität, umfassen.

10. Verfahren zur Modulation von Lichtsignalerzeugungsmitteln in einer einen drahtgebundenen Leitungsanschluss mit einem lichtwellenleitergebundenen Leitungsanschluss verbindenden elektronischen Knoteneinheit zur Datenübertragung, insbesondere im Rahmen einer DOCSIS-Struktur, **gekennzeichnet durch** die Schritte:
- Detektieren eines bevorzugt entsprechend dem DOCSIS-Standard strukturierten digitalen Nutzsignals,
- Aktivieren einer bevorzugt mittels eines Laserhalbleiterbauelementes realisierten Lichtsignalerzeugungsmittels als Reaktion auf das Detektieren und
- Modulieren eines vom Lichtsignalerzeugungsmittel als Reaktion auf die Aktivierung erzeugten optischen Trägersignals für den lichtwellenleitergebundenen Leitungsanschluss mit dem Nutzsignal,
- wobei das Modulieren gegenüber dem Aktivieren um eine vorbestimmte und/oder voreingestellte Verzögerungszeit verzögert ist,
- die insbesondere so bemessen und/oder eingestellt ist, dass die Verzögerungszeit erst abläuft, wenn eine signalerzeugende Lichtquelle der Lichterzeugungsmittel, insbesondere das Laserhalbleiterelement, nach dem Aktivieren mindestens 40%, bevorzugt mindesten 50%, weiter bevorzugt mindestens 60%, einer eingeschwungenen und/oder maximalen optischen Lichtleistung der Lichtquelle erreicht hat
**dadurch** gekennzeichnet,
dass die zur Betriebsstrom- und/oder optischen Lichtleistungsdetektion der Lichtsignalerzeugungsmittel ausgebildeten Modulationsverzögerungsmittel Hysteresemittel (52) so zugeordnet aufweisen, dass nach einer schwellwertbezogenen Aktivierung eines Nutzdatenflusses von den Datenempfangsmitteln zu den Lichtsignalerzeugungsmitteln dieser erst wieder unterbrochen und/oder deaktiviert wird, wenn ein aktueller Detektionswert der Betriebsstrom- bzw. Lichtleistungsdetektion den Schwellwert um einen vorbestimmten Hystereseabstand unterschreitet.

## Claims

1. An electronic node unit for transmitting data between a first line connection (30) for data communication by wire, in particular coaxially by wire, and a second line connection for data communication by fiber, in particular optical fiber, the electronic node unit having
data reception means (32) for a high-frequency, in particular multichannel wanted signal and/or a wanted signal having a plurality of carrier frequencies at the first line connection,
wanted signal detection means (38) for detecting whether the wanted signal is available at the data reception means and can be provided by said data reception means for a transmission, and
light signal generation means (34) which are disposed downstream of the wanted signal detection means, which can be modulated by means of the wanted signal and which can be operated in a noncontinuous operating mode, in particular burst mode, in response to an activation by the wanted signal detection means, the light signal generation means being used for generating an optical carrier signal which is provided at the second line connection in order to couple into an optical fiber and which is modulated by means of the wanted signal
modulation delay means (42, 44; 48; 50; 54) being assigned to the light signal generation means in such a manner that an application of the wanted signal to the light signal generation means which causes the modulation of the optical carrier signal is delayed by a predetermined and/or predefined delay time in addition to a time delay due to a supply period,
the delay time being in particular determined and/or set in such a manner that the delay time only elapses when a signal-generating light source of the light signal generation means reaches at least 40 %, preferably at least 50 %, more preferably at least 60 %, of a steady-state and/or a maximum optical light output of the light source after the activation,
**characterized in that**
the modulation delay means which are realized for detecting the operating current and/or optical light output of the light signal generation means have assigned hysteresis means (52) in such a manner that, after an activation relating to a threshold value of a user data flow from the data reception means to the light signal generation means, said user data flow is only interrupted and/or deactivated when an actual detection value of the operating current and/or light output detection falls below the threshold value by a predefined hysteresis distance.

2. The node unit according to claim 1, **characterized in that** the wanted signal is in a frequency range between 2 MHz and 400 MHz, in particular in a range between 5 MHz and 205 MHz,
and/or follows a frequency and channel distribution of a standard according to DOCSIS.

3. The node unit according to claim 1 or 2, **characterized in that** the optical carrier signal is a laser signal of an optical wavelength in a range between 1250 nm and 1650 nm.

4. The node unit according to any one of claims 1 to 3, **characterized in that** the modulation delay means are realized as a circuit network (42), in particular a passive network and preferably in the form of a delay circuit which is realized from a capacitance and/or an inductivity, said circuit network being inserted between the data reception means and the light generation means.

5. The node unit according to any one of claims 1 to 4, **characterized in that** the modulation delay means are realized as a circuit unit (44, 46) which is disposed downstream of the wanted signal detection means and switches and/or lessens an electronic signal flow from the data reception means to the light signal generation means.

6. The node unit according to any one of claims 1 to 5, **characterized in that** the modulation delay means have current detection means (50) which detect an operating current of the light signal generation means and which activate an electronic wanted signal flow from the data reception means to the light signal generation means in response to a predefined threshold value of the operating current being achieved or exceeded.

7. The node unit according to any one of claims 1 to 6, **characterized in that** the modulation delay means have light detection means (54) which detect an optical light output of the light signal generation means and which activate an electronic wanted signal flow from the data reception means to the light signal generation means in response to a predefined threshold value of the optical light output being achieved or exceeded.

8. The node unit according to claim 7, **characterized in that** the light detection means are realized as a light sensor unit which is assigned to light signal generation means which have semiconductor laser means, in particular as a monitor diode which is assigned to a laser diode.

9. A DOCSIS data transmission system comprising a data transmission network which is realized by means of an coaxial cable and an optic fiber cable as an optic fiber and in which a plurality of terminal points which are coaxially connected, in particular on the side of the user, each comprise the electronic node unit according to any one of claims 1 to 8, in particular for realizing an uplink functionality.

10. A method for modulating light signal generation means in a line connection by wire by means of an electronic node unit which connects a line connection by fiber for the purpose of transmitting data, in particular within the scope of a DOCSIS structure, **characterized by** the steps:
- detecting a digital wanted signal which is preferably structured corresponding to the DOCSIS standard,
- activating a light signal generation mean which is preferably realized by means of a laser semiconductor element in response to the detection and
- modulating an optical carrier signal generated by the light signal generation means in response to the activation for the line connection by fiber to the wanted signal,
- The modulation being delayed by a predefined and/or predetermined delay time,
- the delay time being in particular determined and/or set in such a manner that the delay time only elapses when a signal-generating light source of the light signal generation means, in particular the laser semiconductor element, reaches at least 40 %, preferably at least 50 %, more preferably at least 60 %, of a steady-state and/or a maximum optical light output of the light source after the activation,
**characterized in that**
the modulation delay means which are realized for detecting the operating current and/or optical light output of the light signal generation means have assigned hysteresis means (52) in such a manner that, after an activation relating to a threshold value of a user data flow from the data reception means to the light signal generation means, said user data flow is only interrupted and/or deactivated when an actual detection value of the operating current and/or light output detection falls below the threshold value by a predefined hysteresis distance.

## Revendications

1. Unité de nœud électronique servant à transmettre des données entre un premier raccordement de ligne (30) pour une communication de données par fil, notamment coaxialement par fil, et un deuxième raccordement de ligne pour une communication de données notamment par fibres optiques, l'unité de nœud électronique ayant
des moyens de réception de données (32) pour un signal utile à haute fréquence, notamment à plusieurs canaux et/ou un signal utile qui a une pluralité de fréquences porteuses au premier raccordement de ligne,
l'unité de nœud électronique ayant des moyens de détection de signal utile (38) servant à détecter si le signal utile est appliqué aux moyens de réception de données et si ledit signal utile peut être fourni pour une transmission, et l'unité de nœud électronique ayant
des moyens de génération de signal lumineux (34) qui sont disposés en aval des moyens de détection de signal utile et qui peuvent être modulés au moyen du signal utile et qui peuvent être fonctionnés en un mode de fonctionnement non-continu, notamment un mode rafale, en réponse à une activation par les moyens de détection de signal utile afin de générer un signal porteur optique qui est prévu au deuxième raccordement de ligne pour l'injection dans une fibre optique et qui est modulé au moyen du signal utile,
des moyens de retard de modulation (42, 44 ; 48 ; 50 ; 54) étant assignés aux moyens de génération de signal lumineux de telle manière qu'une application du signal utile aux moyens de génération de signal lumineux qui entraîne la modulation du signal porteur optique est retardé d'un temps de retard prédéterminé et/ou prédéfini outre un décalage temporel qui est dû à une période d'alimentation,
le temps de retard étant notamment calculé et/ou déterminé de telle manière que le temps de retard expire lorsqu'une source lumineuse des moyens de génération de signal lumineux qui génère le signal atteint au moins 40 %, de préférence au moins 50 %, plus préférentiellement au moins 60 %, d'un rendement lumineux optique stable et/ou maximal de la source lumineuse après l'activation,
**caractérisée en ce que**
les moyens de retard de modulation servant à détecter le courant de fonctionnement et/ou un rendement lumineux optique des moyens de génération de signal lumineux ont des moyens d'hystérésis (52) assignés de telle manière qu'après une activation par rapport à une valeur seuil d'un flux de données utiles des moyens de réception de données aux moyens de génération de signal lumineux, ledit flux de données utiles n'est interrompu et/ou désactivé que lorsqu'une valeur de détection actuelle de la détection du courant de fonctionnement ou du rendement lumineux est inférieure à la valeur seuil d'une distance d'hystérésis prédéterminée.

2. Unité de nœud selon la revendication 1, **caractérisée en ce que** le signal utile est dans une bande de fréquences entre 2 MHz et 400 MHz, notamment dans une bande entre 5 MHz et 205 MHz, et/ou respecte une distribution de fréquence et des canaux selon un standard DOCSIS.

3. Unité de nœud selon la revendication 1 ou la revendication 2, **caractérisée en ce que** le signal porteur optique est un signal laser d'une longueur d'onde optique dans une bande entre 1250 nm et 1650 nm.

4. Unité de nœud selon l'une quelconque des revendications 1 à 3, **caractérisée en ce que** les moyens de retard de modulation sont réalisés comme réseau de circuit (42), notamment réseau passif et de préférence en forme d'un circuit de retard qui est réalisé à partir d'une capacité et/ou inductance, qui est injecté entre les moyens de réception de données et les moyens de génération de signal lumineux.

5. Unité de nœud selon l'une quelconque des revendications 1 à 4, **caractérisée en ce que** les moyens de retard de modulation sont réalisés comme unité de commutation (44, 46) qui est disposée en aval des moyens de détection de signal utile et qui commute et/ou atténue un flux de signal électronique des moyens de réception de données aux moyens de génération de signal lumineux.

6. Unité de nœud selon l'une quelconque des revendications 1 à 5, **caractérisée en ce que** les moyens de retard de modulation ont des moyens de détection de courant (50) qui détectent un courant de fonctionnement des moyens de génération de signal lumineux et qui activent un flux de signal utile électronique des moyens de réception de données aux moyens de génération de signal lumineux quand une valeur seuil prédéterminée du courant de fonctionnement est atteinte ou dépassée.

7. Unité de nœud selon l'une quelconque des revendications 1 à 6, **caractérisée en ce que** les moyens de retard de modulation ont des moyens de détection de lumière (54) qui détectent un rendement lumineux optique des moyens de génération de signal lumineux et qui activent un flux de signal utile électronique des moyens de réception de données aux moyens de génération de signal lumineux quand une valeur seuil prédéterminée du rendement lumineux optique est atteinte ou dépassée.

8. Unité de nœud selon la revendication 7, **caractérisée en ce que** les moyens de détection de lumière sont réalisés comme unité de capteur de lumière qui est assignée aux moyens de génération de signal lumineux qui ont des moyens lasers de semi-conducteur, notamment une diode de contrôle qui est assignée à une diode laser.

9. Système de transmission de données DOCSIS comprenant un réseau de transmission de données qui est réalisé au moyen d'un câble coaxial et un câble à fibre optique et dans laquelle une pluralité de terminaux qui sont coaxialement connectés, notamment au côté utilisateur, comprennent l'unité de nœud électronique selon l'une quelconque des revendications 1 à 8, notamment afin de réaliser une fonctionnalité montante.

10. Procédé de modulation des moyens de génération de signal lumineux dans un raccordement de ligne par fil au moyen d'une unité de nœud électronique qui connecte un raccordement de ligne par fibres optiques servant à transmettre des données, notamment dans le cadre d'une structure DOCSIS, **caractérise par** les étapes :
- détection d'un signal utile digital, de préférence structuré selon le standard DOCSIS,
- activation d'un moyen de génération de signal lumineux, de préférence réalisé au moyen d'un élément de semi-conducteur laser, en réponse à la détection et
- modulation d'un signal porteur optique qui est généré par le moyen de génération de signal lumineux en réponse à l'activation pour le raccordement de ligne par fibres optiques au signal utile,
- la modulation étant retardée par rapport à l'activation d'un temps de retard qui est prédéterminé et/ou prédéfini,
- le temps de retard étant notamment calculé et/ou déterminé de telle manière que le temps de retard expire lorsqu'une source lumineuse des moyens de génération de signal lumineux qui génère le signal, notamment l'élément de semi-conducteur laser, atteint au moins 40 %, de préférence au moins 50 %, plus préférentiellement au moins 60 %, d'un rendement lumineux optique stable et/ou maximal de la source lumineuse après l'activation,
**caractérisé en ce que**
les moyens de retard de modulation servant à détecter le courant de fonctionnement et/ou un rendement lumineux optique des moyens de génération de signal lumineux ont des moyens d'hystérésis (52) assignés de telle manière qu'après une activation par rapport à une valeur seuil d'un flux de données utiles des moyens de réception de données aux moyens génération de signal lumineux, ledit flux de données utiles n'est interrompu et/ou désactivé que lorsqu'une valeur de détection actuelle de la détection du courant de fonctionnement ou du rendement lumineux est inférieure à la valeur seuil d'une distance d'hystérésis prédéterminée.
